# EUROPEAN PATENT APPLICATION

(11) **EP 4 102 689 A1**
(43) Date of publication of application: **14.12.2022**
(21) Application number: 20917845.8
(22) Date of filing: 23.12.2020
(51) Int. Cl.: H02K 5/20, H02K 5/06, H02K 9/19

(54) **HOUSING AND ROTATING ELECTRICAL MACHINE INCLUDING SAME**

(30) Priority: 03.02.2020 JP 2020016643
(71) Applicant: Yamaha Hatsudoki Kabushiki Kaisha, Iwata-shi, Shizuoka 438-8501 (JP)
(72) Inventor: KAMICHIKA, Takuro, Iwata-shi, Shizuoka 438-8501 (JP)
(74) Representative: Grünecker Patent- und Rechtsanwälte PartG mbB
(86) International application number: PCT/JP2020/048310
(87) International publication number: WO 2021/157242

(57) **Abstract**

A rotating electrical machine 10 includes a housing 12 which houses a stator 58. The housing 12 includes a cylindrical portion 14 which has an inner circumferential surface 16 for facing an outer circumferential surface of the stator 58. The cylindrical portion 14 is formed with a cooling water channel 32 in its inside. The cooling water channel 32 includes a main water channel 34 extending in a circumferential direction of the cylindrical portion 14 in a zig-zag fashion, and bypass water channels 36 interconnecting the main water channel 34. Preferably, the bypass water channels 36 are provided at end portions of the main water channel 34 at both axial end regions of the cylindrical portion 14, the main water channel 34 has a width W1 which is greater than a thickness T of the main water channel 34, and the bypass water channel 36 has a width W2 which is smaller than the width W1 of the main water channel 34.

## Description

### TECHNICAL FIELD

The present invention relates to a housing and a rotating electrical machine including the same, and more specifically to a housing and a rotating electrical machine for driving a mobility.

### BACKGROUND ART

Patent Literature 1 discloses an example which is pertinent to conventional techniques of this kind. Patent Literature 1 discloses a housing of an electric motor. The housing is cylindrical, and has two end surfaces both opening, and a cylindrical inner circumferential surface. The housing is provided by a cast of an aluminum alloy, and is heat treated for improved tensile strength and hardness. The housing is formed with a seat plate integrally therewith, at an end region thereof.

The housing is formed with a water jacket. The water jacket, which provides a water distribution channel for cooling water to forcibly cooling an iron core of a stator, is located within a thickness of the housing. The water jacket is serpentine, made as a plurality of paths running in a longitudinal direction in an array arranged in a circumferential direction and connected alternately at their respective upper end portions and lower end portions.

The housing is formed with a plug socket integrally therewith, at its axially intermediate region. The plug socket is cylindrical, protrudes from an outer circumferential surface of the housing, and communicates with the water jacket. A plug made of a steel plate is fixed to an inner circumferential surface of the plug socket. The plug closes the plug socket.

The housing is formed with two coupler adapters integrally therewith. Each of the two coupler adapters is cylindrical, protruding from an outer circumferential surface of the housing. One of the two coupler adapters communicates with a first end region inside the water jacket while the other communicates with a second end region inside the water jacket. Each of the two coupler adapters has a coupler made of a steel plate fixed to its inner circumferential surface.

The housing described above is manufactured as follows:
Inside a mold, a salt core is placed and then molten metal is cast. The mold is for formation of the housing. The salt core is made in the shape of the water jacket and formed from salt which dissolves when it makes contact with water. The molten metal inside the mold is allowed to solidify and form the housing. The housing is then taken out of the mold. The housing goes through a heat treatment process (T6). The salt core is crushed by thermal shock forces during the heat treatment, and the heat treatment leaves fragments of the salt core inside the thickness of the housing. From one of the couplers, warm water is injected inside the water jacket. The warm water dissolves the fragments of the salt core, and the salt is discharged from the other coupler together with the warm water.

### CITATION LIST

### PATENT LITERATURE

Patent Literature 1: JP-A 2017-143697

### SUMMARY OF INVENTION

### TECHNICAL PROBLEM

As described, according to Patent Literature 1, the core utilized to cast the housing is a single-piece structure made to the shape of the serpentine water jacket, and therefore it is impossible to increase the strength of the core. Therefore, the core can break when it is transported or when it is placed in the mold for manufacturing the housing and it was impossible to increase productivity of the housing.

Therefore, a primary object of the present invention is to provide a housing which can be manufactured at a higher level of productivity, and a rotating electrical machine including the same.

### SOLUTION TO PROBLEM

According to an aspect of the present invention, there is provided a housing for housing a stator of a rotating electrical machine: The housing includes a cylindrical portion having an inner circumferential surface for facing an outer circumferential surface of the stator; and a cooling water channel provided inside the cylindrical portion. The cooling water channel includes a main water channel extending in a circumferential direction of the cylindrical portion in a zig-zag fashion, and a bypass water channel interconnecting the main water channel.

In the present invention, the cooling water channel which is provided inside the cylindrical portion not only includes the main water channel that is formed in a zig-zag fashion but also further includes the bypass water channel that interconnects the main water channel. When the housing is cast, a one-piece core which follows the shape of the cooling water channel is utilized in order to form the cooling water channel. Since the cooling water channel has the bypass water channel which interconnects the main water channel, it is possible to increase strength of the core. Therefore, it is possible to reduce cases where the core breaks when it is transported or when it is placed in the mold for manufacturing the housing, and increase productivity of the housing.

Preferably, the bypass water channel is provided at end portions of the main water channel located at an axial end region of the cylindrical portion. In this case, of the main water channel which extends in a zig-zag fashion, end portions located at an axial end region of the cylindrical portion are connected with each other. This reduces dislocation between the mutually-connected end portions caused by outer forces when the core is transported or when it is placed in the mold, and therefore it is possible to further reduce breaking of the core, and increase productivity of the housing.

Further preferably, the bypass water channel is provided at end portions of the main water channel located at each axial end region of the cylindrical portion. In this case, it is possible to further improve the strength of the core which is used to form the cooling water channel inside the housing when the housing is cast, and it makes possible to further increase productivity of the housing.

Further, preferably, the main water channel has a width greater than a thickness of the main water channel. In this case, when compared with a main water channel which has the same cross-sectional area, it is possible to provide a greater amount of cooling to the inner circumferential surface of the housing than in cases where the width of the main water channel is smaller than the thickness of the main water channel. This makes it possible to increase cooling effect on the stator.

Preferably, the bypass water channel has a smaller width than the width of the main water channel. In this case, it is possible to reduce the amount of water which flows in the bypass water channel, making it possible to allow an adequate amount of water to flow in the main water channel and to achieve satisfactory cooling effect.

Also, there is provided a rotating electrical machine which includes the housing described above. In this case, since it is possible to increase productivity of the housing, it is possible to increase productivity of the rotating electrical machine.

### ADVANTAGEOUS EFFECTS OF INVENTION

According to the present invention, it becomes possible to increase productivity of the housing and the rotating electrical machine.

### BRIEF DESCRIPTION OF DRAWINGS

Fig. 1 is a front view which shows a rotating electrical machine according to an embodiment of the present invention.
Fig. 2 is a sectional view taken in a line A-A in Fig. 1.
Fig. 3 is a front view which shows a housing included in the rotating electrical machine in Fig. 1.
Fig. 4 is a right side view which shows the housing included in the rotating electrical machine in Fig. 1.
Fig. 5 is a rear view which shows the housing included in the rotating electrical machine in Fig. 1.
Fig. 6 is a left side view which shows the housing included in the rotating electrical machine in Fig. 1.
Fig. 7 is a bottom view which shows the housing included in the rotating electrical machine in Fig. 1.
Fig. 8 is a sectional view taken in a line B-B in Fig. 4.
Fig. 9 is an end view taken in a line C-C in Fig. 4.
Fig. 10 is a sectional view taken in a line D-D in Fig. 5.
Fig. 11 is an illustrative drawing which shows an example of a cooling water channel of the housing included in the rotating electrical machine in Fig. 1.
Fig. 12 is an illustrative drawing which shows another example of the cooling water channel of the housing.
Fig. 13 is an illustrative drawing which shows another example of location for formation of a sand removal hole provided in the housing.
Fig. 14 is an illustrative drawing which shows still another example of location to form the sand removal hole provided in the housing.

### DESCRIPTION OF EMBODIMENTS

Hereinafter, preferred embodiments of the present invention will be described with reference to the drawings.

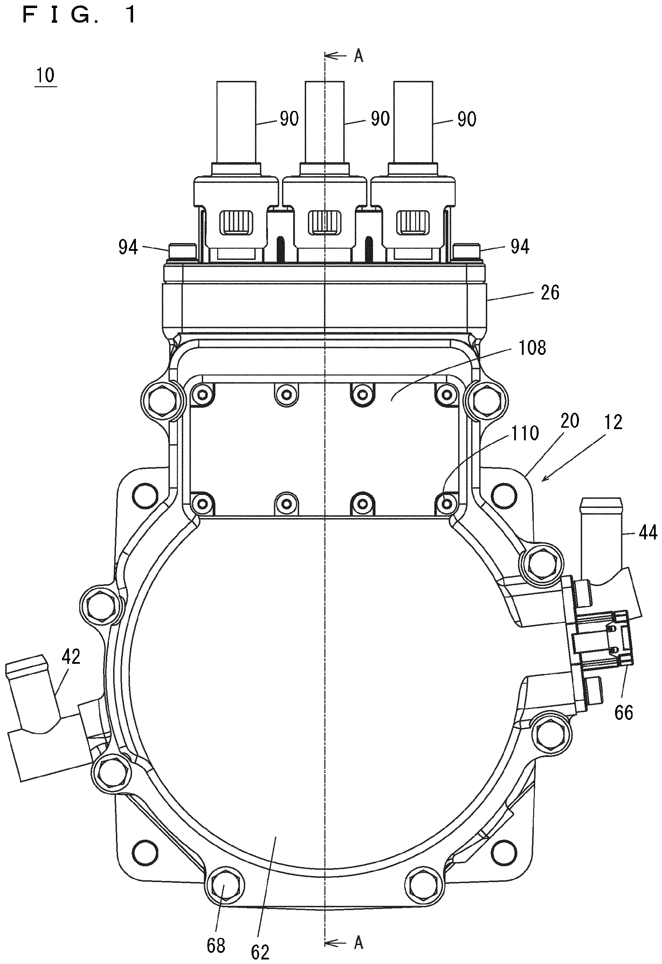

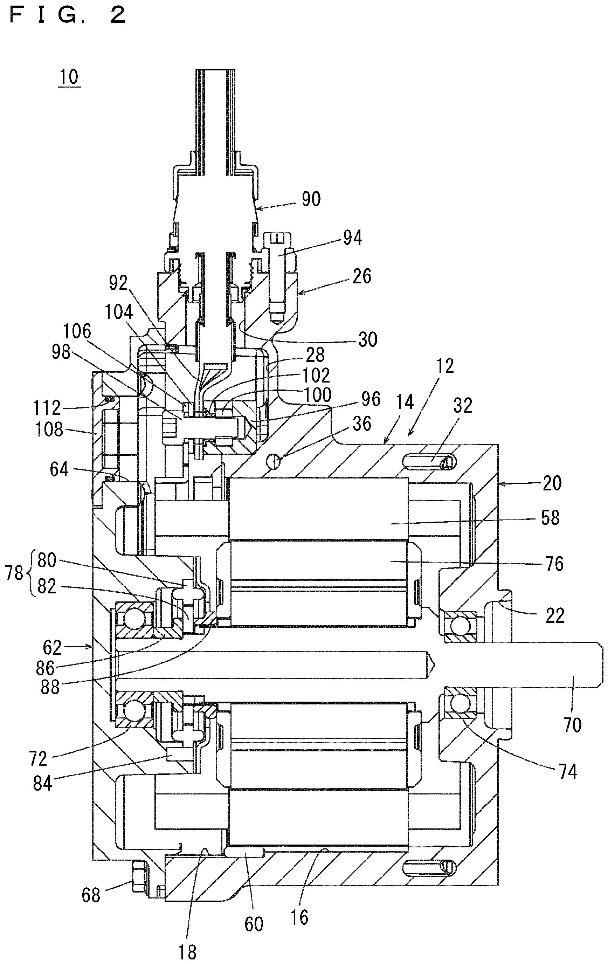

Referring to Fig. 1 and Fig. 2, a rotating electrical machine 10 according to an embodiment of the present invention includes a housing 12.

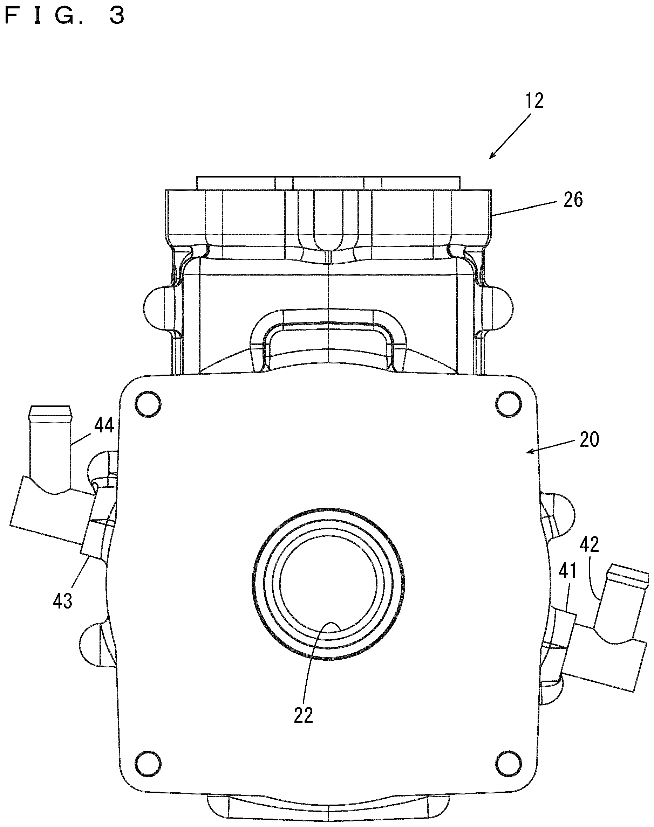

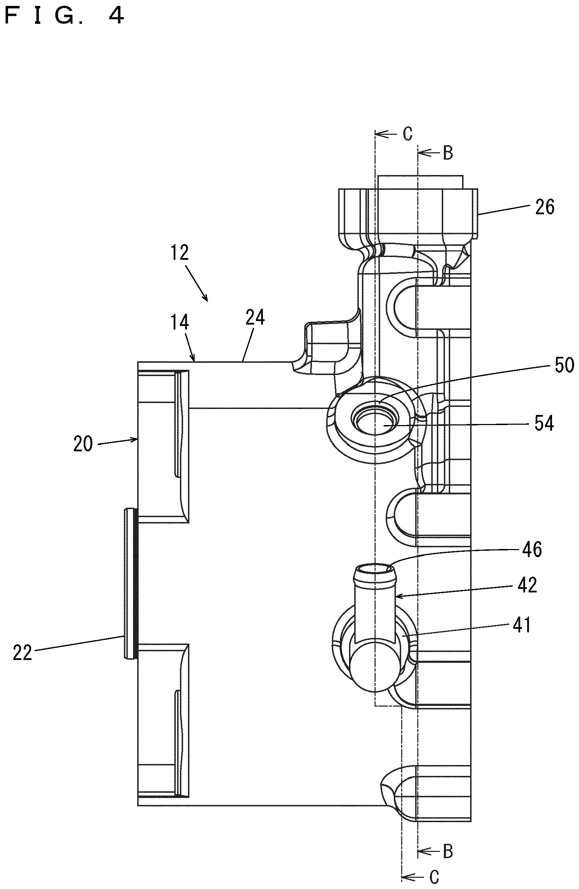

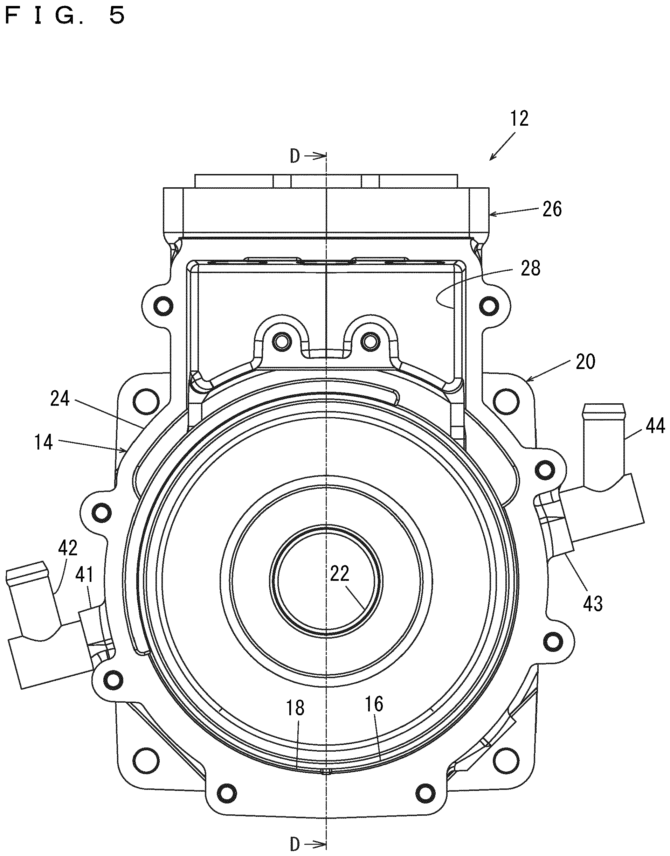

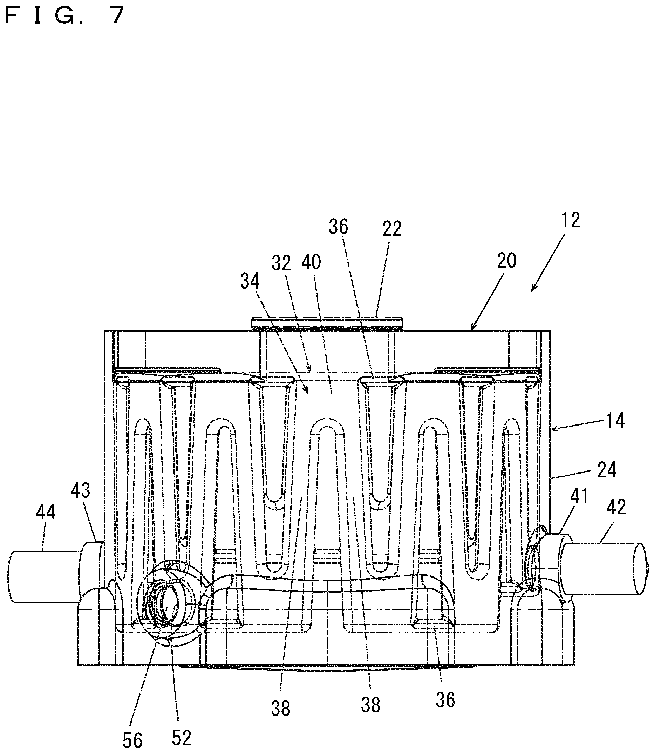

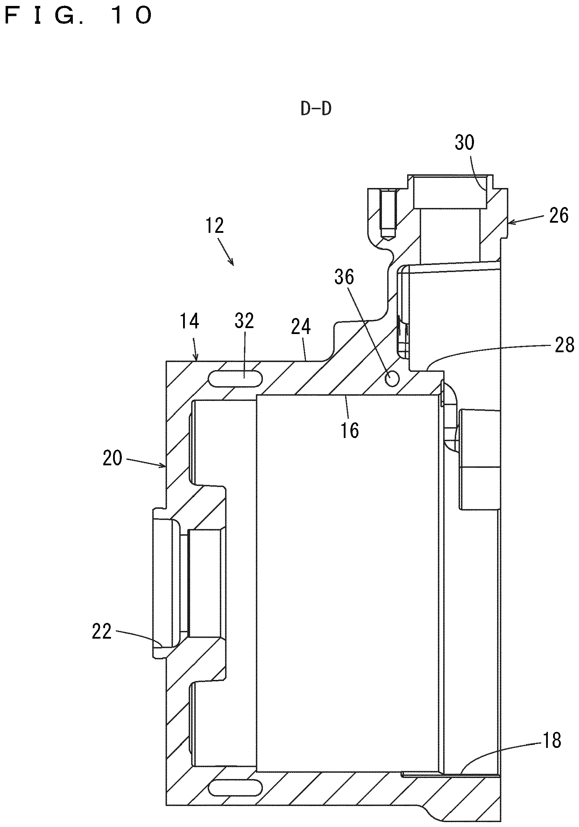

Referring to Fig. 3 through Fig. 10, the housing 12 includes a cylindrical portion 14 which is generally cylindrical.

The cylindrical portion 14 has an inner circumferential surface 16 which faces an outer circumferential surface of a stator 58 (which will be described later), an opening 18 at its first axial end region, and a generally rectangular platy portion 20 provided at its second axial end region. The platy portion 20 has a through-hole 22 at its center. At its end region on the side of the opening 18, the cylindrical portion 14 is provided with a storage portion 26 protruding more outward than an outer circumferential surface 24 of the cylindrical portion 14. The storage portion 26 has a hollow portion 28 and three through-holes 30 extending outward from the hollow portion 28.

The cylindrical portion 14 is formed with a cooling water channel 32 in its inside (within its thickness).

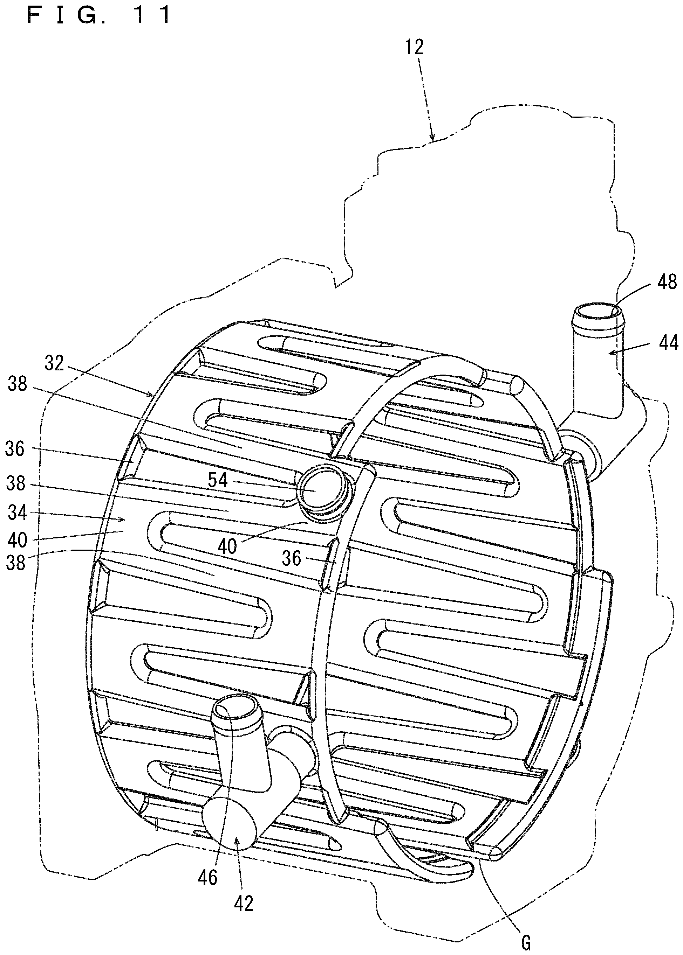

Referring further to Fig. 11, the cooling water channel 32 includes a main water channel 34 extending in a circumferential direction of the cylindrical portion 14 in a zig-zag fashion so as to surround a stator 58; and bypass water channels 36 interconnecting the main water channel 34.

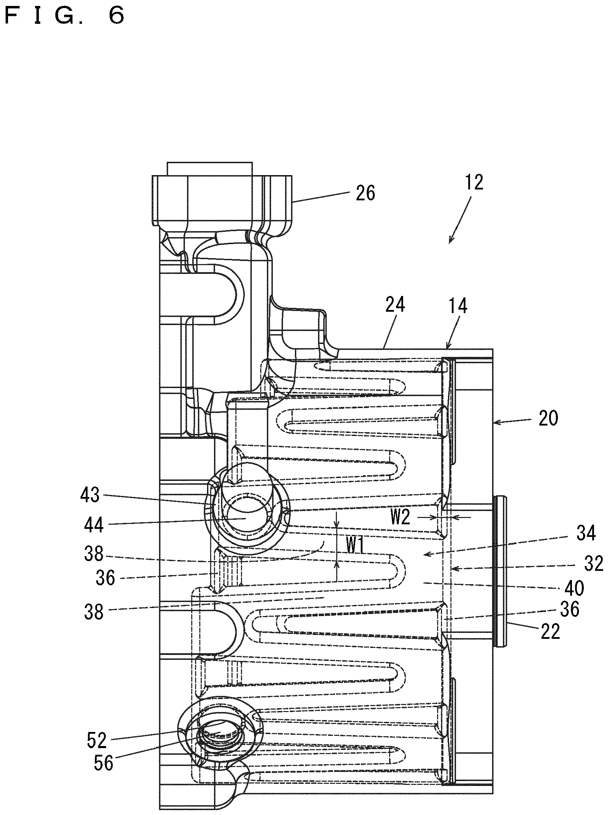

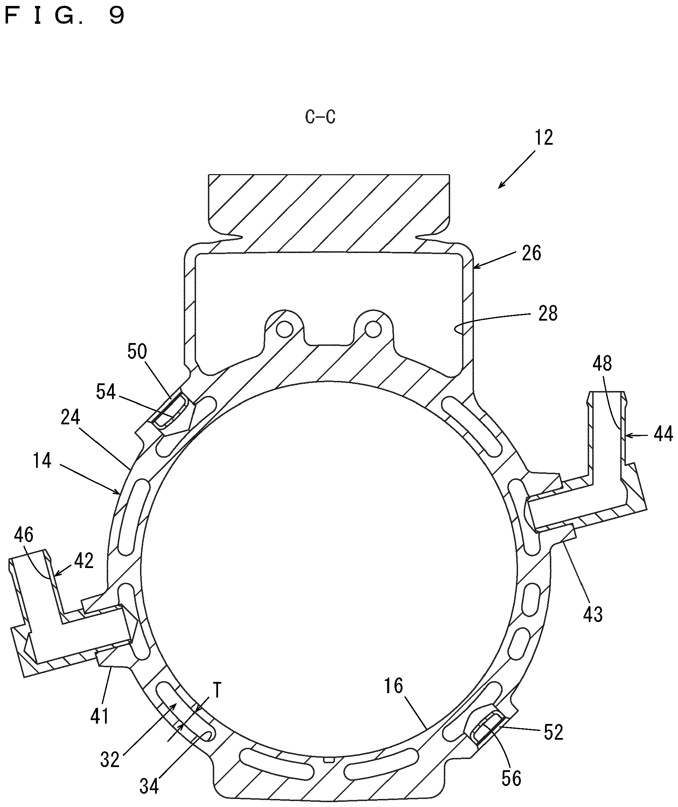

The main water channel 34 includes a plurality of first channels 38 and a plurality of second channels 40. The plurality of first channels 38 each extend axially of the cylindrical portion 14, at a distance from each other in a circumferential direction of the cylindrical portion 14. The first channels 38 which are mutually adjacent in the circumferential direction of the cylindrical portion 14 are laid in an opening pattern somewhat like a letter V, having their respective ends connected with each other by the second channel 40 which represents a U turn portion. In other words, in the plurality of first channels 38, mutually adjacent first channels 38 have their first end regions connected with each other and their second end regions connected with each other alternately by the second channels 40 which extend in a circumferential direction of the cylindrical portion 14. As a result, the main water channel 34 extending in a zig-zag fashion is obtained. Preferably, the main water channel 34 has a width W1 greater than a thickness T of the main water channel 34. More preferably, the width W1 of the main water channel 34 is not smaller than 1.5 times of the thickness T of the main water channel 34 (see Fig. 6 and Fig. 9). Also, the second channel 40 has a greater width (dimension of the second channel 40 in an axial direction of the cylindrical portion 14) than a width (dimension of the first channel 38 in a circumferential direction of the cylindrical portion 14) of the first channel 38. In other words, the dimension of the second channel 40 perpendicular to a direction of water flow is greater than the dimension of the first channel 38 perpendicular to a direction of water flow.

The main water channel 34 as described above is interconnected with each other by the bypass water channels 36. The bypass water channel 36 is provided at first end portions of the main water channel 34 located at a first axial end region of the cylindrical portion 14, and connect the first end portions of the main water channel 34 with each other. The bypass water channel 36 is also provided at second end portions of the main water channel 34 located at a second axial end region of the cylindrical portion 14, and connect the second end portions of the main water channel 34 with each other. In other words, the bypass water channel 36 connects portions of the main water channel 34 represented by the second channels 40 which are mutually adjacent to each other in the circumferential direction of the cylindrical portion 14, of the main water channel 34. In the present embodiment, the bypass water channels 36 connect the plurality of second channels 40 which are provided at the first axial end region (on the side of the opening 18) of the cylindrical portion 14, i.e., connect all of the second channels 40 which are mutually adjacent to each other in the circumferential direction of the cylindrical portion 14, except for a location occupied by a groove portion G (see Fig. 11) of a positioning key 60 (which will be described later). Also, the bypass water channels 36 connect the plurality of second channels 40 which are provided at the second axial end region (on the side of the platy portion 20) of the cylindrical portion 14, i.e., connect all of the second channels 40 which are mutually adjacent to each other in the circumferential direction of the cylindrical portion 14. Preferably, the bypass water channel 36 has a width W2 smaller than the width W1 of the main water channel 34. More preferably, the width W2 of the bypass water channel 36 is not greater than a half of the width W1 of the main water channel 34 (see Fig. 6). In the present embodiment, the bypass water channel 36 has a thickness which is generally equal to the thickness T of the main water channel 34.

On the outer circumferential surface 24 of the cylindrical portion 14, hollow coupler adapters 41, 43 are provided in a protruding fashion to communicate with the cooling water channel 32. More specifically, the coupler adapters 41, 43 are provided at places close to the opening 18 in the outer circumferential surface 24 of the cylindrical portion 14. The coupler adapters 41, 43 are at diametrically opposite positions from each other across the center of the cylindrical section 14. The coupler adapters 41, 43 are provided with couplers 42, 44. The coupler 42 is formed as a tube in a shape like a letter L, and has a generally L-shaped through-hole 46. The through-hole 46 communicates with the cooling water channel 32, and serves as an inlet of water to the cooling water channel 32. The coupler 44 is formed as a tube in a shape like a letter V, and has a generally V-shaped through-hole 48. The through-hole 48 communicates with the cooling water channel 32, and serves as an outlet of water from the cooling water channel 32. More specifically, the through-holes 46, 48 communicate with the main water channel 34 (second channels 40) (see Fig. 9 and Fig. 11).

Further, in the outer circumferential surface 24 of the cylindrical portion 14, sand removal holes 50, 52 are provided to remove core sand from the cooling water channel 32 after casting of the housing 12 is complete. More specifically, the sand removal holes 50, 52 are provided at places close to the opening 18 in the outer circumferential surface 24 of the cylindrical portion 14. The sand removal hole 50 is between the coupler 42 and the storage portion 26. The sand removal hole 52 is on an opposite side from the storage portion 26 when viewed from the coupler 44. The sand removal holes 50, 52 communicate with the cooling water channel 32. More specifically, the sand removal holes 50, 52 communicate with the main water channel 34 (second channels 40) (see Fig. 6 and Fig. 7, Fig. 9 and Fig. 11). When the housing 10 is completed, the sand removal holes 50, 52 are plugged with lids 54, 56 respectively, whereby the sand removal holes 50, 52 are closed.

The housing 12 described above is manufactured as follows for example.

Inside an unillustrated mold, a core is placed and then molten metal is cast. The mold is for formation of the housing 12. The core is made into the shape to follow the cooling water channel 32, hollow portions of the coupler adapters 41, 43, and the sand removal holes 50, 52. In the present embodiment, the core is provided by a shell core which is made of sand bound with resin. The molten metal inside the mold is allowed to solidify, to form the housing 12. The housing 12 is then taken out of the mold. The core which is left inside the thickness of the cylindrical portion 14 of the housing 12 is smashed by applying vibration and is removed out of the coupler adapters 41, 43 and the sand removal holes 50, 52. After the sand of the core is removed out of the housing 12, the coupler adapters 41, 43 are fitted with the couplers 42, 44 respectively. Further, the sand removal holes 50, 52 are covered with lids 54, 56 respectively, whereby the sand removal holes 50, 52 are closed.

Returning to Fig. 1 and Fig. 2, the housing 12 houses the stator 58. The stator 58 is disposed at a predetermined position inside the housing 12, with a positioning key 60. The opening 18 of the housing 12 is provided with a cover 62. The cover 62 has a generally rectangular penetrating portion 64 at a position from which access can be made near bolts 98 (which will be described later). Also, the cover 62 is provided with a signal line coupler 66. The cover 62 is fixed to the housing 12 with a plurality of fasteners 68.

Inside the housing 12, a shaft 70 is provided. The shaft 70 penetrates the stator 58. The shaft 70 has its end portion protruding from the through-hole 22 of the housing 12. The shaft 70 is supported rotatably by the cover 62 and the housing 12, via ball bearings 72, 74. On an outer circumferential surface of the shaft 70, a rotor 76 is fixed oppose the stator 58. Between the cover 62 and the shaft 70, there is provided a resolver 78 for detection of a rotating angle of the shaft 70. The resolver 78 includes a resolver stator 80 which is attached to the cover 62, and a resolver rotor 82 which is attached to the shaft 70. The resolver stator 80 is disposed at a predetermined position with a positioning key 84. The resolver rotor 82 is sandwiched from two side thereof, by the collars 86, 88, and is disposed at a predetermined position.

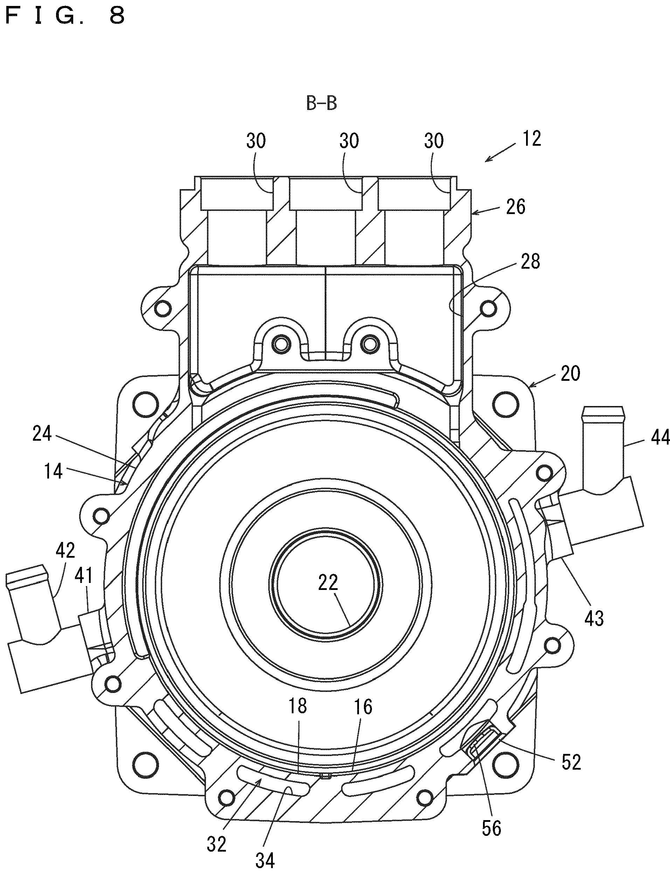

Three high-voltage wiring connectors 90 for three-phase electric power are each inserted into corresponding ones of the through-holes 30 of the storage portion 26. Each of the high-voltage wiring connectors 90 has a lower end terminal 92, which is routed to the hollow portion 28 of the storage portion 26 (see Fig. 8). Each high-voltage wiring connector 90 is attached to the storage portion 26 with a fastener 94.

Inside the hollow portion 28, there is fixed a holder 96 which is made of an insulating material such as a resin. The terminal 92 of the high-voltage wiring connector 90 is held between the holder 96 and a bolt 98. The holder 96 holds, inside thereof, a nut 100 and a collar 102. Between the terminal 92 and a head portion of the bolt 98, a washer 104 and a platy connection member 106 are sandwiched. The bolt 98 is inserted through the connection member 106, the washer 104, the terminal 92 and the collar 102, and then threaded into the nut 100, thereby fixing these members. The terminal 92 is connected with an unillustrated coil of the stator 58 via the washer 104 and the connection member 106.

A cover 108 is provided at the penetrating portion 64 of the cover 62. The cover 108 is attached to the cover 62 with a plurality of fasteners 110. A gap between the cover 108 and the penetrating portion 64 is sealed with an O ring 112.

According to the housing 12 of the rotating electrical machine 10 as has been described, the cooling water channel 32 which is provided inside the cylindrical portion 14 not only includes the main water channel 34 that is formed in a zig-zag fashion but also further includes the bypass water channels 36 that interconnect the main water channel 34. When the housing 12 is cast, a one-piece core which follows the shape of the cooling water channel 32 is utilized in order to form the cooling water channel 32. By making an arrangement that the cooling water channel 32 has the bypass water channels 36 which interconnect the main water channel 34, it becomes possible to increase strength of the core. Therefore, it is possible to reduce cases where the core breaks when it is transported or when it is placed in the mold for manufacturing the housing 12, and increase productivity of the housing 12.

Of the main water channel 34 which extends in a zig-zag fashion, end portions located at an axial end region of the cylindrical portion 14 are connected with each other by the bypass water channel 36. This reduces dislocation between the mutually-connected end portions caused by outer forces when the core is transported or when it is placed in the mold, and therefore it is possible to further reduce breaking of the core, and increase productivity of the housing 12.

Since the bypass water channels 36 are provided at end portions of the main water channel 34 at both axial end regions of the cylindrical portion 14, it is possible to further improve the strength of the core which is used to form the cooling water channel 32 inside the housing 12 when the housing 12 is cast, and it makes possible to further increase productivity of the housing 12.

The width W1 of the main water channel 34 is greater than the thickness T of the main water channel 34. Therefore, when compared with a main water channel which has the same cross-sectional area, it is possible to provide a greater amount of cooling to the inner circumferential surface of the housing 12 than in cases where the width of the main water channel is smaller than the thickness of the main water channel. Therefore, it is possible to increase cooling effect on the stator 58.

The width W2 of the bypass water channel 36 is smaller than the width W1 of the main water channel 34. Therefore, it is possible to reduce the amount of water which flows in the bypass water channel 36, making it possible to allow an adequate amount of water to flow in the main water channel 34 and to achieve satisfactory cooling effect.

Since it is possible to increase productivity of the housing 12 as described, it is possible to increase productivity of the rotating electrical machine 10.

The main water channel 34 extends in a zig-zag fashion, in which the first channels 38 which are mutually adjacent to each other are laid in an opening pattern somewhat like a letter V. Therefore, it is possible to let the water flow smoothly through the cooling water channel 32, and to obtain further increased cooling effect. Further, by making the arrangement that the second channel 40 has a greater width (dimension of the second channel 40 in an axial direction of the cylindrical portion 14) than that of the first channel 38 (dimension of the first channel 38 in a circumferential direction of the cylindrical portion 14), it becomes possible to let the water flow more smoothly through the cooling water channel 32, and therefore obtain further increased cooling effect.

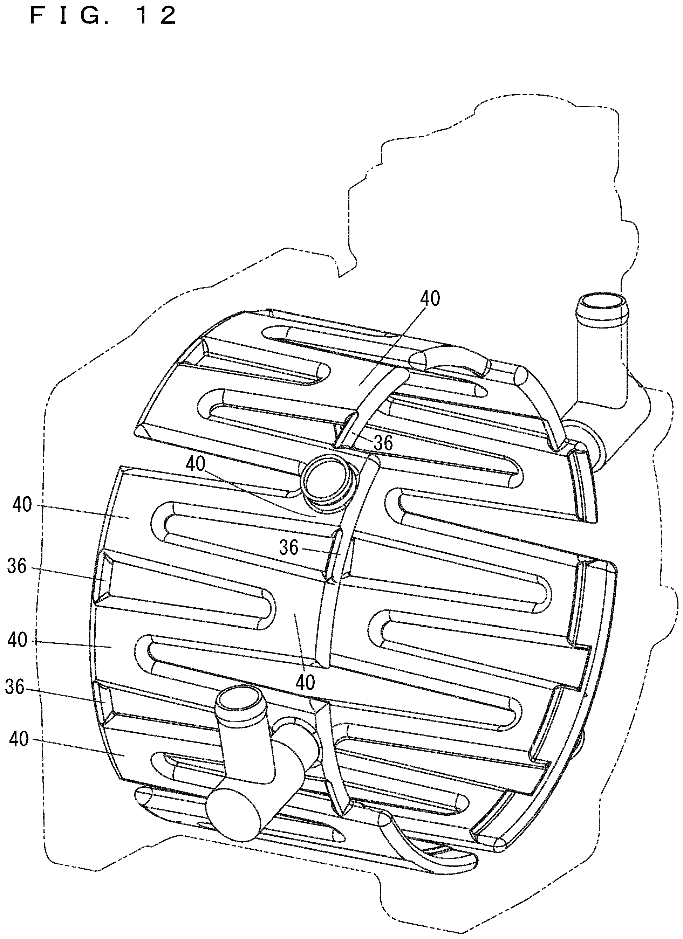

In the embodiment described above, the bypass water channels 36 connect the plurality of the second channels 40, i.e., connect all of the second channels 40 which are mutually adjacent to each other in the circumferential direction of the cylindrical portion 14 at the first axial end region (on the side of the opening 18) of the cylindrical portion 14, except for a groove portion G (see Fig. 11), and further, connect the plurality of the second channels 40, i.e., connect all of the second channels 40 which are mutually adjacent to each other in the circumferential direction of the cylindrical portion 14 at the second axial end region (on the side of the platy portion 20) of the cylindrical portion 14. However, the invention is not limited to this. As shown in Fig. 12, in the plurality of the second channels 40 provided in the first axial end region of the cylindrical portion 14 and the plurality of the second channels 40 provided in the second axial end region of the cylindrical portion 14, formation of the bypass water channel 36 may be skipped every three channels. In other words, there may be an arrangement that after forming the bypass water channel 36 in the cylindrical portion 14 two consecutive times in the circumferential direction, then formation of the bypass water channel 36 is skipped next time.

In the embodiment described above, the sand removal holes 50, 52 are provided only on the first end region side (the side closer to the opening 18) in the outer circumferential surface 24 of the cylindrical portion 14. However, the invention is not limited to this. In addition to these, a plurality of sand removal holes may be provided on the second end region side (the side closer to the platy portion 20) in the outer circumferential surface 24 of the cylindrical portion 14.

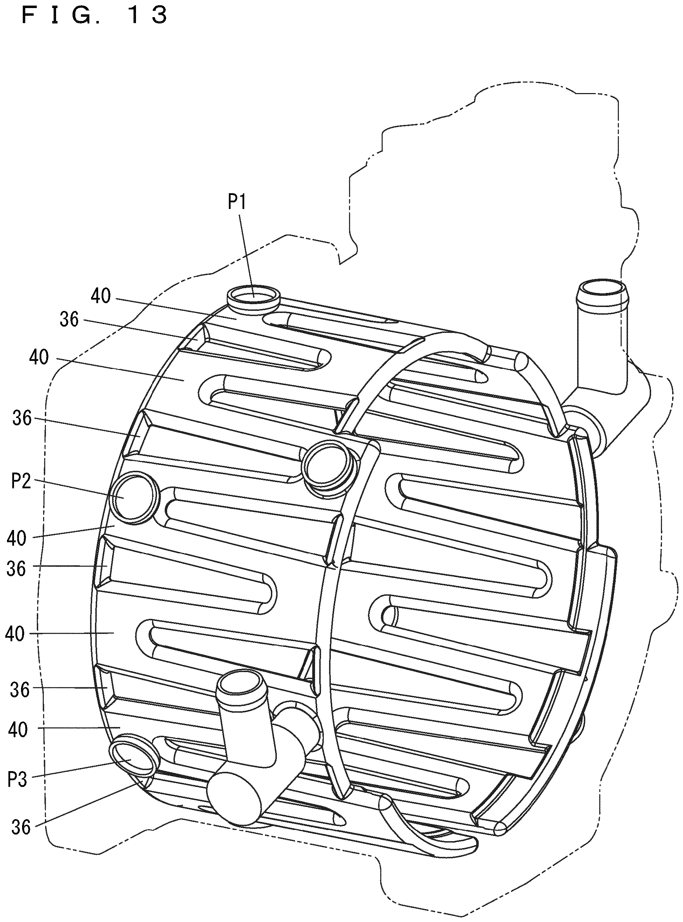

For example, in the case of the embodiment shown in Fig. 11, there may be additional sand removal holes provided at positions indicated by alpha-numeric symbols P1, P2 and P3 in Fig. 13. In other words, there may be provided sand removal holes communicating with the second channels 40 which are in the second axial end region of the cylindrical portion 14, every other second channel 40 in the circumferential direction of the cylindrical portion 14. The sand removal holes are provided in the second channels 40 each of which is connected with the bypass water channels 36 at both sides in the circumferential direction of the cylindrical portion 14. In this case, it becomes easier, at the time of manufacturing the housing 12, to remove the core sand and gases which occur at the time of casting, from the cooling water channel 32.

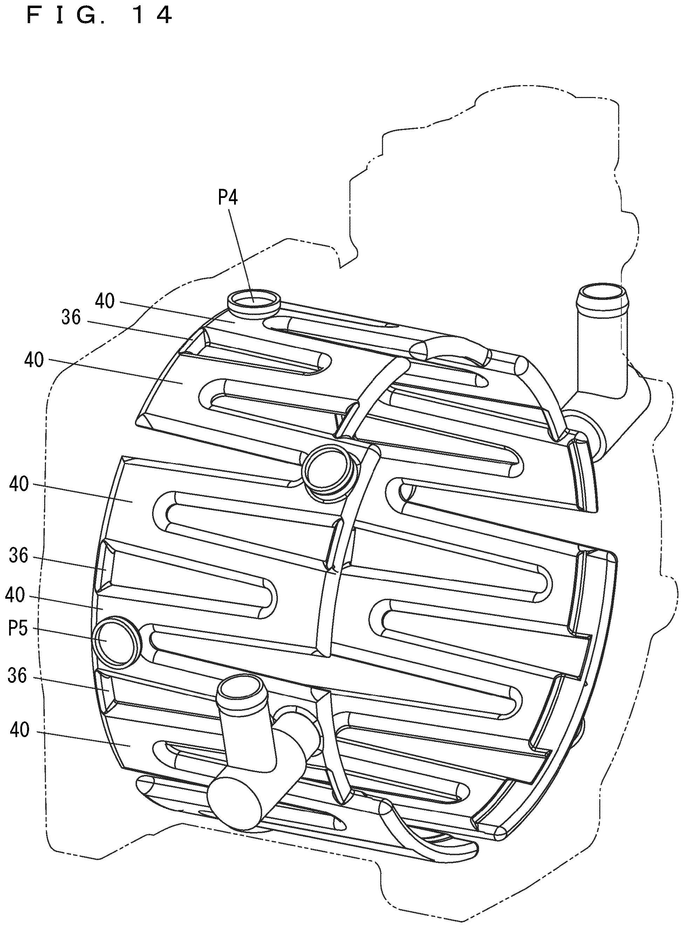

Also, in the case of the embodiment shown in Fig. 12, there may be additional sand removal holes provided at positions indicated by alpha-numeric symbols P4 and P5 in Fig. 14. In other words, there may be provided sand removal holes communicating with the second channels 40 which are in the second axial end region of the cylindrical portion 14, every three second channels 40 in the circumferential direction of the cylindrical portion 14. The sand removal holes are provided in the second channels 40 each of which is connected with the bypass water channels 36 at both sides in the circumferential direction of the cylindrical portion 14. In this case again, it becomes easier, at the time of manufacturing the housing 12, to remove the core sand and gases which occur at the time of casting, from the cooling water channel 32.

In the embodiment described above, the bypass water channels 36 are provided at both end regions of the main water channel 34. However, the invention s not limited to this. The bypass water channel 36 may be provided at only one of the first end region and the second end region of the main water channel 34. Also, the bypass water channel 36 may connect any other portions, rather than the end portions, of the main water channel 34.

The main water channel may be formed in a curved fashion, without having any straight portions.

The present invention being thus far described in terms of preferred embodiments, it is obvious that these may be varied in many ways within the scope and the spirit of the present invention. The scope of the present invention is only limited by the accompanied claims.

### REFERENCE SIGNS LIST

- 10: Rotating electrical machine
- 12: Housing
- 14: Cylindrical portion
- 16: Inner circumferential surface of cylindrical portion
- 32: Cooling water channel
- 34: Main water channel
- 36: Bypass water channel
- 50, 52: Sand removal holes
- 58: Stator
- 70: Shaft
- 76: Rotor
- T: Thickness of main water channel
- W1: Width of main water channel
- W2: Width of bypass water channel

## Claims

1. A housing for housing a stator of a rotating electrical machine, comprising:
a cylindrical portion having an inner circumferential surface for facing an outer circumferential surface of the stator; and
a cooling water channel provided inside the cylindrical portion, wherein
the cooling water channel includes a main water channel extending in a circumferential direction of the cylindrical portion in a zig-zag fashion, and a bypass water channel interconnecting the main water channel.

2. The housing according to Claim 1, wherein the bypass water channel is provided at end portions of the main water channel located at an axial end region of the cylindrical portion.

3. The housing according to Claim 2, wherein the bypass water channel is provided at end portions of the main water channel located at each axial end region of the cylindrical portion.

4. The housing according to one of Claims 1 through 3, wherein the main water channel has a greater width than a thickness of the main water channel.

5. The housing according to one of Claims 1 through 4, wherein the bypass water channel has a smaller width than the width of the main water channel.

6. A rotating electrical machine comprising the housing according to one of Claims 1 through 5.
